# EUROPÄISCHE PATENTANMELDUNG

(11) **EP 4 052 561 A1**
(43) Veröffentlichungstag der Anmeldung: **07.09.2022**
(21) Anmeldenummer: 21209521.0
(22) Anmeldetag: 22.11.2021
(51) Int. Cl.: A01D 57/04, A01D 41/14

(54) **SCHNEIDWERK AUFWEISEND EINE HASPEL MIT TELESKOPARMEN**

(30) Priorität: 03.03.2021 DE 102021105150
(71) Anmelder: CLAAS Selbstfahrende Erntemaschinen GmbH, 33428 Harsewinkel (DE)
(72) Erfinder: Füchtling, Christian, 48317 Drenstein Rinkerode (DE); Hinz, Thomas, 33428 Harsewinkel (DE); Grimm, Hauke, 26180 Rastede (DE)
(74) Vertreter: CLAAS Gruppe

(57) **Zusammenfassung**

Die vorliegende Erfindung betrifft ein Schneidwerk (1), umfassend einen Mittenabschnitt (3) sowie zumindest zwei Seitenabschnitte (4), die jeweils durch ein Rahmengelenk (15) mit dem Mittenabschnitt (3) um eine im Wesentlichen horizontal verlaufende Schwenkachse (14) schwenkbar verbunden sind, wobei der Mittenabschnitt (3) und die Seitenabschnitte (4) einen segmentierten Rahmen (2) aufweisen, sowie eine aus zumindest zwei Haspelsegmenten (17) bestehende Haspel (16), wobei das jeweilige Haspelsegment (17) an mehrteiligen Tragarmen (18) gegenüber dem Rahmen (2) des Mittenabschnittes (3) sowie der Seitenabschnitte (4) in horizontaler Richtung verstellbar angeordnet ist, wobei die Tragarme (18) jeweils einen ersten Armabschnitt (19) und einen relativ zum ersten Armabschnitt (19) verschieblichen zweiten Armabschnitt (20) aufweisen, an dem das jeweilige Haspelsegment (17) angeordnet ist, wobei die Tragarme (18) teleskopierbar ausgeführt sind, und wobei die zweiten Armabschnitte (20) der äußersten Tragarme (18) des Schneidwerks (1) an ihren Enden (21) eine vertikale Drehachse (22) aufweisen, um welche das Haspelsegment (17) schwenkbar angelenkt ist.

## Beschreibung

Die vorliegende Erfindung betrifft ein Schneidwerk gemäß dem Oberbegriff des Anspruches 1.

Ein Schneidwerk der eingangs genannten Art ist aus der WO 2020/1546444 A1 bekannt. Das Schneidwerk umfasst einen Mittenabschnitt sowie zumindest zwei Seitenabschnitte, die jeweils durch ein Rahmengelenk mit dem Mittenabschnitt um eine normal zur Längsachse des Schneidwerks im Wesentlichen horizontal verlaufende Schwenkachse schwenkbar verbunden sind. Der Mittenabschnitt und die Seitenabschnitte weisen einen segmentierten Rahmen auf, um die Schwenkbewegung der Seitenabschnitte unabhängig voneinander zu ermöglichen. Weiterhin umfasst das Schneidwerk eine aus zumindest zwei Haspelsegmenten bestehende Haspel, wobei das jeweilige Haspelsegmente an mehrteiligen Tragarmen gegenüber den Rahmen des Mittenabschnittes sowie der Seitenabschnitte in horizontaler Richtung verstellbar angeordnet ist. Die Tragarme weisen jeweils einen an den Rahmen angelenkten ersten Armabschnitt, der sich in horizontaler Richtung über den Durchmesser der Haspelsegmente hinaus erstreckt, und einen relativ zum ersten Armabschnitt verschieblichen zweiten Armabschnitt in Form einer gleitgelagerten Konsole auf, an der die Haspelsegmente endseitig angeordnet sind. Die Seitenabschnitte erfahren ausgehend von einer im Wesentlichen in horizontaler Richtung fluchtenden Ausrichtung relativ zum Mittenabschnitt während des Erntebetriebes eine Auslenkung in vertikaler Richtung aufgrund von Bodenunebenheiten. Dabei schwenken die Seitenabschnitte um die Schwenkachse sowohl nach oben als auch nach unten, d.h. der vertikale Abstand des äußeren Endes des jeweiligen Seitenabschnittes zum Boden nimmt zu oder ab. Bei diesen Auf- und Abbewegungen verändert das jeweilige Haspelsegment seine relative Position zur äußeren Seitenwand der Seitenabschnitte, da die Schwenkachsen der Rahmengelenke zur Mitte des Mittenabschnitt beabstandet sind. Zur Kompensation dieser Längenänderung ist vorgesehen, die äußersten Tragarme gelenkig am Rahmen und der Haspel anzuordnen, sodass eine seitliche Ausweichbewegung des jeweiligen äußersten Tragarmes ermöglicht wird. Diese Bewegungsfreiheit muss allerdings in einem ohnehin schon engen Bauraum erreicht werden. Ein Grund für diesen engen Bauraum ist unter anderem die Anforderung, das jeweilige Haspelsegment so nah wie möglich an die Seitenwand heranreichen zu lassen, so dass das Schnittsystem respektive Messerbalken weitestgehend von den Haspelsegmenten überdeckt wird. Darüber hinaus soll ein vertikal zum Messerbalken orientiertes Seitenmesser, ein sogenanntes Rapsmesser, an der Seitenwand angeordnet werden können, ohne das der Verfahrweg der Haspelsegmente in horizontaler Richtung eingeschränkt werden muss. Hierzu wird das Seitenmesser mit einer Seitenneigung zur Seitenwand oder einem großen Abstand zum Messerbalken an der Seitenwand angeordnet, wobei dies mit erhöhten Erntegutverlusten einhergeht. Es kann alternativ auch ein größerer Abstand zwischen Seitenwand und Haspel gewählt werden, was jedoch zu Lasten der Überdeckung mit dem Schnittsystem geht.

Ausgehend vom genannten Stand der Technik liegt der Erfindung die Aufgabe zugrunde, ein Schneidwerk der eingangs genannten weiterzubilden, welches die Nachteile des Standes der Technik vermeidet und hierzu insbesondere die äußeren Tragarm derart zu gestalten, dass diese sich durch eine bauraumsparende Anordnung auszeichnen sowie zugleich die Funktion des Längenausgleichs zur Vermeidung von Kollisionen von Haspelsegment und äußerstem Tragarm erfüllen.

Diese Aufgabe wird erfindungsgemäß durch ein Schneidwerk gemäß dem Oberbegriff des Anspruches 1 in Verbindung mit den kennzeichnenden Merkmalen des Anspruches 1 gelöst. Vorteilhafte Weiterbildungen sind Gegenstand der hiervon abhängigen Unteransprüche.

Gemäß dem Anspruch 1 wird ein Schneidwerk vorgeschlagen, welches einen Mittenabschnitt sowie zumindest zwei Seitenabschnitte umfasst, die jeweils durch ein Rahmengelenk mit dem Mittenabschnitt um eine normal zur Längsachse des Schneidwerks im Wesentlichen horizontal verlaufende Schwenkachse schwenkbar verbunden sind und außenseitig eine Seitenwand aufweisen, wobei der Mittenabschnitt und die Seitenabschnitte einen segmentierten Rahmen aufweisen, sowie eine aus zumindest zwei Haspelsegmenten bestehende Haspel, wobei das jeweilige Haspelsegmente an mehrteiligen Tragarmen gegenüber den Rahmen des Mittenabschnittes sowie der Seitenabschnitte in horizontaler Richtung verstellbar angeordnet ist, wobei die Tragarme jeweils einen an den Rahmen angelenkten ersten Armabschnitt und einen relativ zum ersten Armabschnitt verschieblichen zweiten Armabschnitt aufweisen, an dem das jeweilige Haspelsegment angeordnet ist. Erfindungsgemäß ist vorgesehen, dass die Tragarme teleskopierbar ausgeführt sind, wobei die zweiten Armabschnitte der äußersten Tragarme des Schneidwerks an ihren freien Enden eine vertikale Drehachse aufweisen, um welche das Haspelsegment schwenkbar angelenkt ist. Das Haspelsegment ist um die vertikale Drehachse in einer horizontalen Ebene schwenkbar angelenkt. Durch die jeweilige endseitig in Verlängerung der teleskopierbaren äußersten Tragarme angeordnete vertikale Drehachse, wird ein Winkelausgleich der Haspelachse bei einer Höhenbewegung des jeweiligen Seitenabschnitts an dem mehrteiligen Schneidwerk bewirkt. Der jeweilige äußerste Tragarm kann durch seitliches Bewegen die Relativbewegung der Haspel gegenüber dem Rahmen des Seitenabschnitts kompensieren.

Zur Übertragung einer rotierenden Antriebsbewegung auf die Haspel weist jedes Haspelsegment eine in einem Haspelrohr angeordnete Haspelwelle auf, wobei benachbarte Haspelwellen durch eine winkelbewegliche Kupplung miteinander verbunden sind.

Insbesondere erstrecken sich die freien Enden der zweiten Armabschnitte der Tragarme nur bis zur Rotationsachse der Haspelwelle. Dadurch, dass sich die Tragarme nur noch bis zur Haspelmitte erstrecken, wird die Gefahr reduziert, dass die äußersten Tragarme bei einer vertikalen Auslenkung der Seitenabschnitte um die Schwenkachse mit der vorderen oder hinteren Kante der Haspel kollidieren können. Dies ermöglicht es, die Haspel mit möglichst geringerem Abstand zur Seitenwand der Seitenabschnitte anzuordnen, so dass sich der Bereich des Messerbalkens, der von der Haspel nicht überdeckt wird, reduziert wird.

Weiterhin können die ersten Armabschnitte der äußersten Tragarme durch ein Gelenk an dem Rahmen der Seitenabschnitte angelenkt sein, welches dazu eingerichtet ist, zumindest eine Schwenkbewegung um eine zur Längsachse des Schneidwerks achsparallele Achse sowie eine beidseitige laterale Kippbewegung oder Schwenkbewegung relativ zu dieser Achse zuzulassen. Das Gelenk kann als ein Gelenk mit drei Freiheitsgraden ausgeführt sein, mit dem die äußersten Tragarme an dem Rahmen der Seitenabschnitte angelenkt sind. Dabei kann es sich z.B. um ein Kugelgelenk mit zwei Doppelzapfen handeln. Alternativ kann das Gelenk als Gummilager respektive Metall-Gummilager ausgeführt sein, welches eine Schwenkbewegung um die Achse des Gummilagers sowie eine beidseitige laterale Kippbewegung relativ zu dieser Achse ermöglicht. Durch die mehrgelenkige Anbindung mit den zusätzlichen Freiheitsgraden kann der jeweilige äußerste Tragarm durch seitliches Bewegen die Relativbewegung der Haspel bzw. des Haspelsegments zum Rahmen des Seitenabschnitts aufnehmen.

Bevorzugt kann der erste Armabschnitt als ein offenes oder geschlossenes Hohlprofil ausgeführt sein, in welchem der zweite Armabschnitt relativbeweglich angeordnet ist. Die Integration des zweiten Armabschnitts in den ersten Armabschnitt hat den Vorteil, dass die Nutzung des Bauraums zwischen Haspelsegment und Rapsmesser optimiert wird, so dass der Rapsmesser kompakt und nah an dem Messerbalken positionieren lässt, ohne dass es zu einer Kollision mit dem äußersten Tragarm kommt. Die Anordnung des Seitenmessers bzw. Rapsmessers bleibt dabei ohne Auswirkung auf die Verfahrbarkeit der Haspel in vertikaler und horizontaler Richtung.

Gemäß einer bevorzugten Ausführungsform kann der zweite Armabschnitt in dem ersten Armabschnitt gleitgelagert oder rollengelagert sein. Hierzu können zumindest zwei Laufelemente beabstandet zueinander in dem ersten Armabschnitt angeordnet sein. Die Laufelemente können als Gleitelemente, Wälzelemente oder Rollenelemente ausgeführt sein, die ein möglichst reibungsarmes Abgleiten an bzw. in dem zweiten Armabschnitt ermöglichen.

Bevorzugt kann sich der zweite Armabschnitt der Tragarme in Längsrichtung gesehen auf der dem Haspelsegment abgewandten Seite über den ersten Armabschnitt hinaus erstrecken. Dadurch ist ein ausreichender Verfahrweg beim Teleskopieren gegeben und zugleich wird eine ausreichende Abstützung des zweiten Armabschnitts in dem ersten Armabschnitt gewährleistet.

Insbesondere sind die Tragarme durch Linearantriebe teleskopierbar.

Des Weiteren können die Tragarme durch Linearantriebe in vertikaler Richtung verstellbar sein.

Bevorzugt können die Linearantriebe hydraulisch und/oder elektromechanisch betreibbar sein. Als Linearantriebe zur Verstellung der Tragarme in horizontaler bzw. vertikaler Richtung kommen insbesondere Hydraulikzylinder und/oder Linearmotoren in Frage. Diese lassen sich einfach ansteuern und reagieren zeitnah auf Steuerbefehle. Im Fall von als Hydraulikzylinder ausgebildeten Linearantriebe sind diese bevorzugt als doppeltwirkende Hydraulikzylinder ausgeführt.

Gemäß einer bevorzugten Weiterbildung kann der jeweilige zur Seitenwand benachbart angeordnete äußerste Tragarm bezogen auf eine gedachte Vertikale unter einem Winkel in Richtung des Mittenabschnitts geschwenkt bzw. geneigt angeordnet sein. Der jeweilige äußere Seitenabschnitt ist außenseitig von einer sich im Wesentlichen normal zur Längsachse des Bandschneidwerks erstreckenden Seitenwand begrenzt, hinter der sich Antriebskomponenten des Messerbalkens sowie der Seitenmesser befinden können. Die nach innen zur Schneidwerksmitte hin gerichtete Neigung des jeweiligen zur Seitenwand benachbart angeordneten äußersten Tragarms hat den Vorteil, dass zwischen dem Tragarm und die Haspelsegmente außenseitig begrenzende Wandungen ein lateraler Abstand einstellt, der ausgehend von der vertikalen Drehachse hin zum Außenumfang der Wandung zunimmt.

Insbesondere können die Linearantriebe zur Höhenverstellung zumindest des jeweiligen äußersten Tragarmes durch jeweils ein Gelenk an dem Rahmen der Seitenabschnitte sowie an dem Tragarm angelenkt sein, welches dazu eingerichtet ist, zumindest eine Schwenkbewegung um eine zur Längsachse des Schneidwerks achsparallele Achse sowie eine beidseitige laterale Kippbewegung relativ zu dieser Achse zuzulassen.

Bevorzugt kann das Schneidwerk als ein Bandschneidwerk ausgeführt sein. An dem Mittenabschnitt und den Seitenabschnitten kann auf der dem segmentierten Rahmen gegenüberliegenden Vorderseite des Bandschneidwerkes ein bodenkopierender Messerbalken angeordnet sein, der sich im Wesentlichen über die gesamte Breite des Bandschneidwerkes erstreckt.

Die vorliegende Erfindung wird nachstehend anhand eines in den Zeichnungen dargestellten Ausführungsbeispieles näher erläutert.

Es zeigen:
- Fig. 1: eine schematische Ansicht eines als Bandschneidwerk ausgeführten Schneidwerks;

- Fig. 2: schematisch eine perspektivische Teilansicht des Schneidwerkes gemäß Fig. 1;
- Fig. 3: schematisch eine perspektivische Teilansicht des Schneidwerkes gemäß Fig. 2 von hinten;
- Fig. 4: schematisch eine perspektivische Teilansicht des Schneidwerks;
- Fig. 5: schematisch eine Teilschnittansicht des Schneidwerks gemäß Fig. 4; und
- Fig. 6: schematisch eine Detailansicht des Schneidwerks gemäß Fig. 4 von vorne.

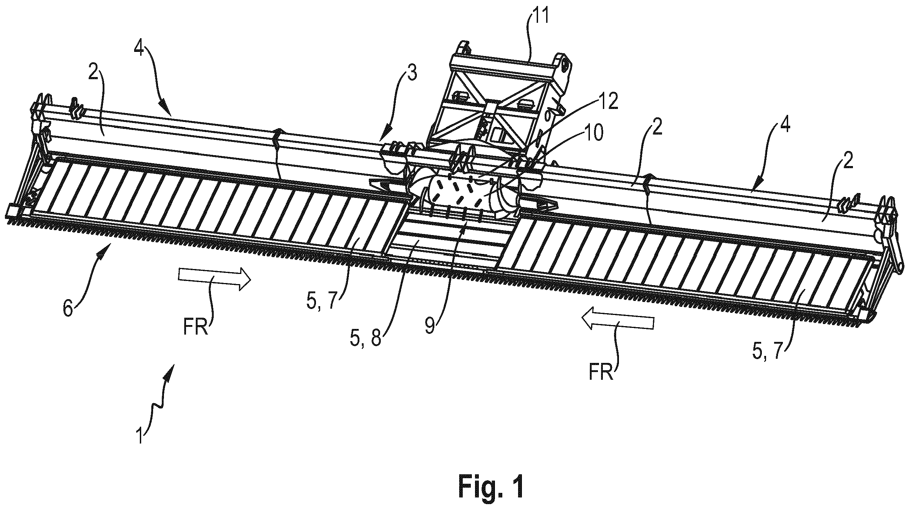

Fig. 1 zeigt eine schematische Darstellung eines als Bandschneidwerk ausgebildeten Schneidwerkes 1. Das als Bandschneidwerk ausgebildete Schneidwerk 1 umfasst einen Mittenabschnitt 3 und mindestens zwei benachbart zu dem Mittenabschnitt 3 angeordnete Seitenabschnitte 4. Das Schneidwerk 1 weist einen segmentierten Rahmen 2 auf. Dabei weisen Mittenabschnitt 3 und die Seitenabschnitte 4 jeweils einzelne Rahmensegmente auf, die zusammen den segmentierten Rahmen 2 bilden. An dem Mittenabschnitt 3 und den Seitenabschnitten 4 ist auf der dem segmentierten Rahmen 2 gegenüberliegenden Vorderseite des Schneidwerkes 1 ein bodenkopierender Messerbalken 6 angeordnet, der sich im Wesentlichen über die gesamte Breite des Schneidwerkes 1 erstreckt. Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Förderband 7 ausgeführt ist, welches parallel zur Längsachse des Schneidwerks 1 umläuft. Die endlos umlaufenden Förderbänder 7 sind benachbart zu dem Mittenabschnitt 3 angeordnet, um von dem Messerbalken 6 abgeschnittenes Erntegut seitwärts in Richtung des Mittenabschnittes 3 zu transportieren, was durch Pfeile FR veranschaulicht ist, und einer Einzugsvorrichtung 9 zuzuführen. Der Mittenabschnitt 3 umfasst ebenfalls eine als zumindest ein endlos umlaufendes Förderband 8 ausgebildete Fördervorrichtung 5. Das zumindest eine Förderband 8 des Mittenabschnittes 3 fördert dabei quer zur Förderrichtung FR der Förderbänder 7 der Seitenabschnitte 4. Andere Ausgestaltungen der Fördervorrichtung 5 im Bereich des Mittenabschnitts 3 sind denkbar. Die Einzugsvorrichtung 9 ist als eine antreibbare Einzugswalze 10 ausgeführt. Die Einzugsvorrichtung 9 führt das von den endlos umlaufenden Förderbändern 7 bzw. 8 dem Mittenabschnitt 3 seitlich zugeführte Erntegut einer in dem Rahmen 2 des Mittenabschnitts 3 vorgesehenen, hinter der Einzugswalze 10 befindlichen Öffnung 12 zu, durch welche das Erntegut durch einen an einem nicht dargestellten Mähdrescher befindlichen Einzugskanal 11, an dem das Bandschneidwerk 1 lösbar befestigt ist, dem Mähdrescher zur weiteren Verarbeitung zugeführt wird.

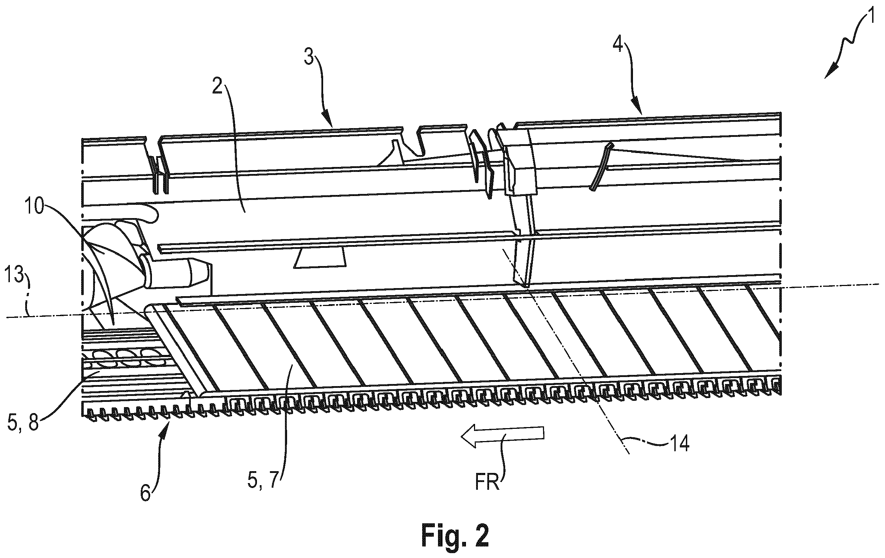

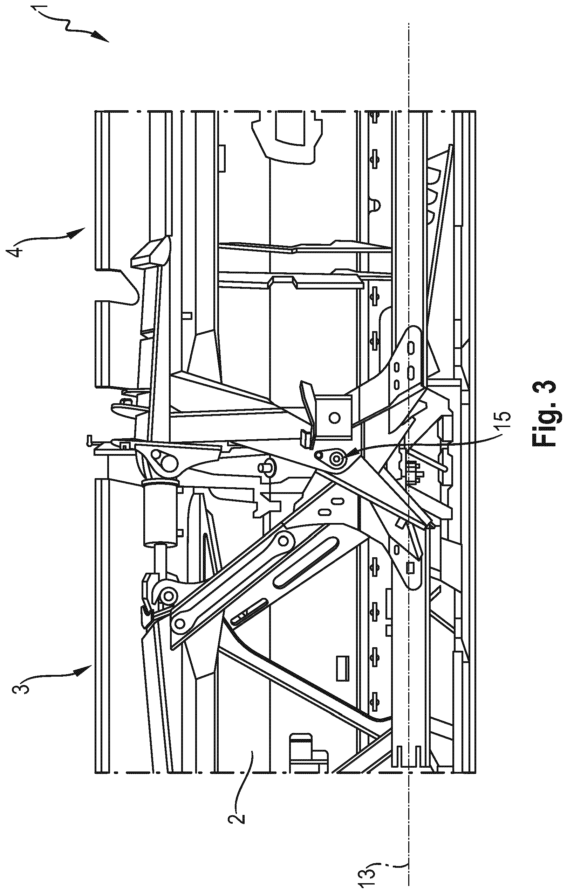

In Fig. 2 ist schematisch eine perspektivische Teilansicht des als Bandschneidwerk ausgeführten Schneidwerkes 1 gemäß Fig. 1 dargestellt. Fig. 3 zeigt schematisch eine Ansicht des Schneidwerkes 1 gemäß Fig. 2 von hinten. Die Seitenabschnitte 4 sind jeweils durch ein Rahmengelenk 15, wie in Fig. 3 dargestellt, mit dem Mittenabschnitt 3 um eine normal zur Längsachse 13 des Schneidwerks 1 im Wesentlichen horizontal verlaufende Schwenkachse 14 schwenkbar verbunden. Die Seitenabschnitte 4 sind identisch aufgebaut und spiegelbildlich einander gegenüberliegend an dem Mittenabschnitt 3 angeordnet. Die nachfolgenden Ausführungen gelten für beide Seitenabschnitte 4 entsprechend.

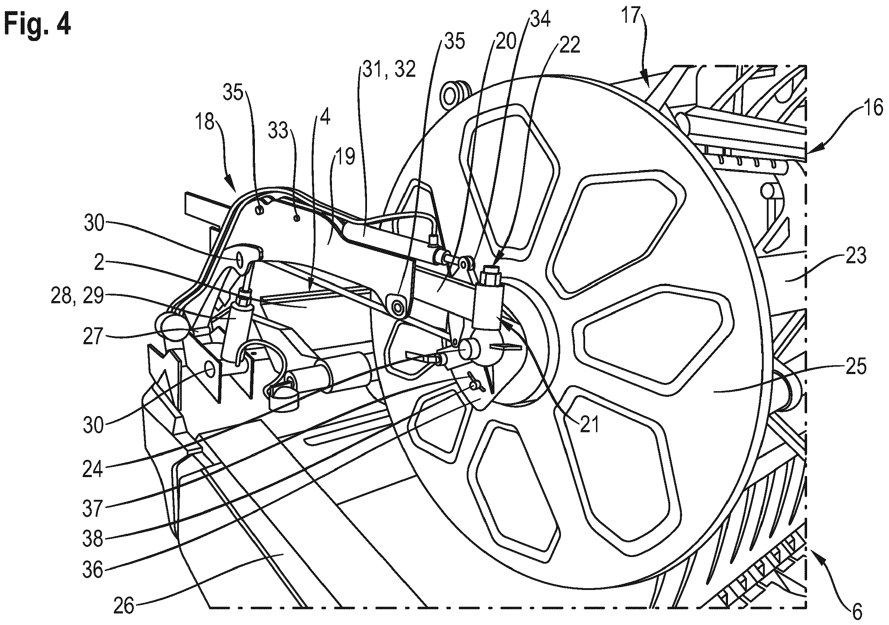

Die Darstellung in Fig. 4 zeigt schematisch und exemplarisch eine perspektivische Teilansicht des Schneidwerks 1. Das Schneidwerk 1 umfasst eine aus zumindest zwei Haspelsegmenten 17 bestehende Haspel 16, welche sich im Wesentlichen über die gesamte Breite des Schneidwerks 1 erstreckt. Der generelle Aufbau der Haspel 16 ist bekannt, so dass auf nähere Ausführungen hierzu verzichtet wird. Das jeweilige Haspelsegmente 17 ist an mehrteiligen Tragarmen 18 gegenüber den Rahmen 2 des Mittenabschnittes 3 sowie der Seitenabschnitte 4 in horizontaler Richtung verstellbar angeordnet. In den Fig. 4 bis Fig. 6 ist lediglich einer der äußersten Tragarme 18 dargestellt. Als äußerste Tragarme 18 werden die Tragarme 18 des Schneidwerks 1 bezeichnet, die diametral gegenüberliegend endseitig an dem Rahmen 2 des jeweiligen Seitenabschnitts 4 angeordnet sind. Wegen der spiegelbildlichen Anordnung und der identischen Ausführung der äußersten Tragarme 18 gelten die nachstehenden Ausführungen für die beiden äußersten Tragarme 18 entsprechend. Die weiteren Tragarme 18 des Schneidwerks 1, die zwischen den äußersten Tragarmen 18 angeordnet sind, können abweichend von diesen ausgeführt sein.

Bei einer aus zwei Haspelsegmenten 17 bestehenden Haspel 16 sind zwei Tragarme 18 nebeneinander im Mittenabschnitt 3 angeordnet sowie jeweils ein Tragarm 18 außenseitig an dem Schneidwerk 1. Bei einer hier und bevorzugt aus drei Haspelsegmenten 17 bestehenden Haspel 16 sind entsprechend ein Paar Tragarme 18 im Mittenabschnitt 3 sowie benachbart zu diesen jeweils ein weiterer Tragarm 18 am jeweiligen Seitenabschnitt 4, insbesondere im Bereich der Schwenkachse 14, angeordnet. Zwischen den jeweiligen Tragarmen 19 ist ein Haspelsegment 17 um eine Rotationsachse 24 drehbar angeordnet. An den einander gegenüberliegenden Enden des jeweiligen Haspelsegmentes 17 können plattenförmige Wandungen 25 angeordnet sein. Zur Übertragung einer rotierenden Antriebsbewegung auf die Haspel 16 weist jedes Haspelsegment 17 eine in einem Haspelrohr 23 angeordnete Haspelwelle auf, wobei benachbarte Haspelwellen durch eine winkelbewegliche Kupplung miteinander verbunden sind.

Die Seitenabschnitte 4 sind außenseitig jeweils durch eine Seitenwand 26 begrenzt, welche sich quer zur Längsachse 13 und im Wesentlichen senkrecht zum Förderband 7 erstreckt und den Aufnahmebereich des Schneidwerks 1 für Erntegut seitlich begrenzt. Die Seitenwände 26 sind rahmenförmig ausgebildet. Die Seitenwände 26 dienen darüber hinaus der Aufnahme von - nicht dargestellten - Seitenmessern an ihrer Stirnseite, deren Messerbalken im Wesentlichen senkrecht zum Messerbalken 6 des Schneidwerke 1 orientiert ist. Die seitlich an der jeweiligen Seitenwand 26 angeordneten Seitenmesser, auch als Rapsmesser bezeichnet, dienen dazu, stark ineinander verschlungenes Erntegut beiderseits des Schneidwerks 1 in einer vertikalen Ebene zu zerteilen, um Ernteverluste zu reduzieren. Bei Sonderkulturen wie beispielsweise Raps, die eine starke Verwachsung der Stängel und Fruchtteile ineinander zeigen, gewährleisten die Seitenmesser eine gute Trennung des Halmgutes zwischen dem noch stehenden und dem vom Schneidwerk 1 aufzunehmenden Erntegut. Bei einer solchen Erntegutart auftretende Ernteverluste, die mit der Verwendung eines üblichen passiven Halmteilers einhergingen, werden so weitgehend vermieden.

Die mehrteiligen Tragarme 18 weisen jeweils einen an den Rahmen 2 angelenkten ersten Armabschnitt 19 und einen relativ zum ersten Armabschnitt 19 verschieblichen zweiten Armabschnitt 20 auf, an dem das jeweilige Haspelsegment 17 angeordnet ist. Die relative Verschiebbarkeit des zweiten Armabschnitt 20 gegenüber dem ersten Armabschnitt 19 ermöglicht es, die Haspel 16 respektive die einzelnen Haspelsegmente 17 in horizontaler Richtung des Schneidwerks 1 zu verschieben, um das Schneidwerk 11 an unterschiedliche Erntebedingungen bzw. Erntegutarten anzupassen. Die Tragarme 18 sind teleskopierbar ausgeführt und mittels Fremdkraft betätigbar. Die zweiten Armabschnitte 20 der äußersten Tragarme 18 des Schneidwerks 1 weisen an ihren freien Enden 21 eine vertikale Drehachse 22 auf, um welche das Haspelsegment 17 in einer horizontalen Ebene schwenkbar angelenkt ist. Die freien Enden 21 der zweiten Armabschnitte 20 der äußersten Tragarme 18 erstrecken sich nur bis zur Rotationsachse 24 der Haspelwelle.

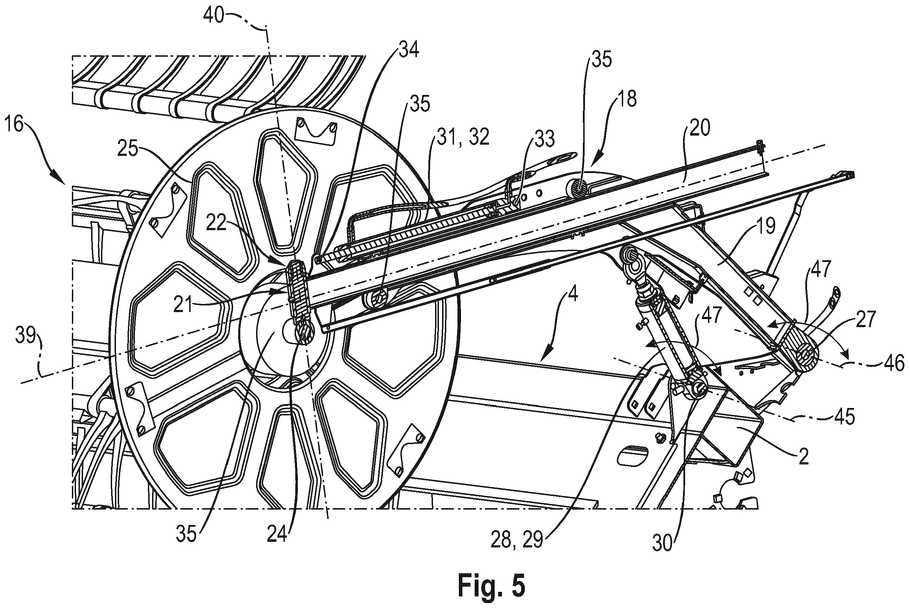

Die ersten Armabschnitte 19 der beiden äußersten Tragarme 18 sind durch ein Gelenk 27 an dem Rahmen 2 der entsprechenden Seitenabschnitte 4 angelenkt. Das Gelenk 27 ist derart ausgeführt, dass der äußerste Tragarm 18 zumindest eine Schwenkbewegung um eine zur Längsachse 13 des Schneidwerks 1 achsparallele Achse 45 sowie eine beidseitige laterale Kippbewegung oder Schwenkbewegung 47 relativ zu der Achse 45 ausführen kann, wie in Fig. 5 veranschaulicht ist. Hierzu kann das Gelenk 27 als ein Gelenk mit drei Freiheitsgraden ausgeführt sein, z.B. als Kugelgelenk mit zwei Doppelzapfen oder als Gummilager respektive Metall-Gummilager.

Zur Höhenverstellung der Tragarme 18 sind Linearantriebe 28 vorgehen. Die Linearantriebe 28 können hydraulisch oder elektromechanisch betreibbar sein. Hier und vorzugsweise sind die Linearantriebe 28 zur Höhenverstellung als Hydraulikzylinder 29 ausgeführt. Die Hydraulikzylinder 29 sind einenends an dem Rahmen 2 und anderenends am ersten Armabschnitte 19 angelenkt. Die Hydraulikzylinder 29 zumindest der äußersten Tragarme 18 sind durch Gelenke 30 angelenkt, die ebenfalls dazu ausgeführt sind, dass der Linearantrieb 28 bzw. der Hydraulikzylinder 29 zumindest eine Schwenkbewegung um eine zur Längsachse 13 des Schneidwerks 1 achsparallele Achse 46 sowie eine beidseitige laterale Kippbewegung oder Schwenkbewegung 47 relativ zu der Achse 46 ausführen kann.

Die Tragarme 18 sind zudem durch Linearantriebe 31 teleskopierbar ausgeführt. Der als doppeltwirkender Hydraulikzylinder 32 oder als Linearmotor ausgeführte Linearantrieb 31 ist einenends in einer Lagerstelle 33 an dem ersten Armabschnitt 19 und anderenends in einer Lagerstelle 34 an dem zweiten Armabschnitt 20 angeschlossen.

Der erste Armabschnitt 19 ist als ein offenes oder geschlossenes Hohlprofil ausgeführt, in welchem der zweite Armabschnitt 20 relativbeweglich angeordnet ist. Der zweite Armabschnitt 20 ist hierzu in dem ersten Armabschnitt 19 gleitgelagert oder rollengelagert. Im dargestellten Ausführungsbeispiel ist der der zweite Armabschnitt 20 gegenüber dem ersten Armabschnitt 19 durch Rollenlager 35 relativbeweglich integriert. Der in den ersten Armabschnitt 19 integrierte zweite Armabschnitt 20 der Tragarme 18 erstreckt sich in Längsrichtung gesehen auf der dem Haspelsegment 17 abgewandten Seite über den ersten Armabschnitt 19 hinaus.

Die Drehachse 22 am freien Ende 21 ist an einer Konsole 36 angeordnet und ist von einem hohlzylindrischen Lagerauge am freien Ende 21 des zweiten Armabschnitts 20 aufgenommen. Die Konsole 36 ist koaxial zur Rotationsachse 24 der Haspelwelle an dieser angeordnet. Zur Einstellung der Neigung der Drehachse 22 weist die Konsole 36 eine zur Rotationsachse 24 koaxiale Ausnehmung 37 auf, in der ein Bolzen 38 geführt ist. Die Ausnehmung 37 ist als bogenförmiges Langloch ausgeführt.

In Fig. 5 ist schematisch eine Teilschnittansicht eines der äußersten Tragarme 18 des Schneidwerks 1 gemäß Fig. 4 dargestellt. Mit Bezugszeichen 39 ist die Längsachse des zweiten Armabschnitts 20 und mit Bezugszeichen 40 die Längsachse der Drehachse 22. Die Längsachse 40 der Drehachse 22 verläuft stets orthogonal zur Längsachse 39 des zweiten Armabschnitts 20.

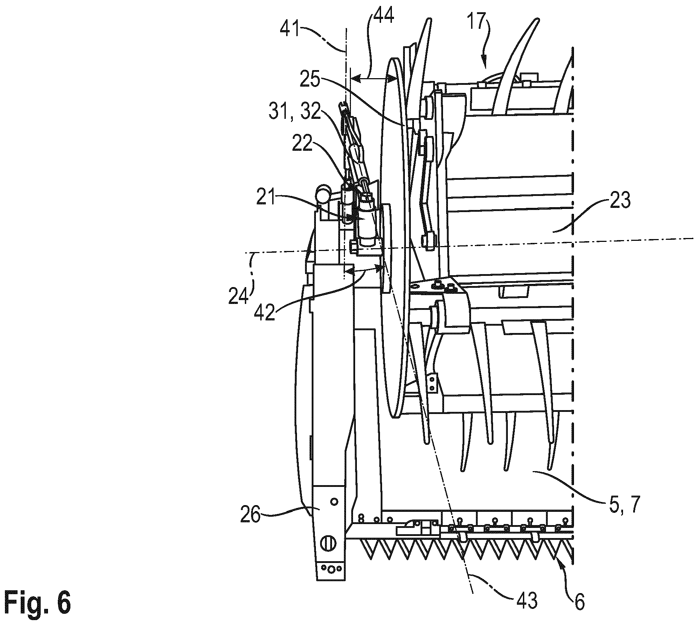

Fig. 6 zeigt eine Detailansicht des Schneidwerks 1 von vorne. Der jeweilige zur Seitenwand 26 benachbart angeordnete äußerste Tragarm 18 ist bezogen auf eine gedachte Vertikale 41 unter einem Winkel 42 in Richtung des Mittenabschnitts 3 geschwenkt angeordnet. Zur Veranschaulichung der Neigung um den Winkel 42 ist eine Hilfslinie 43 dargestellt. Durch die Neigung des äußersten Tragarms 18 um den Winkel 42 stellt sich in der dargestellten Position des Seitenabschnitts 4, in der dieser gegenüber dem Mittenabschnitt 3 keine Auslenkung um die Schwenkachse 14 aufweist, ein lateraler Abstand 44 ein. Der laterale Abstand 44 nimmt zwischen dem Tragarm 18 und der das Haspelsegmente 17 außenseitig begrenzenden Wandung 25 ausgehend von der vertikalen Drehachse 22 hin zum Außenumfang der Wandung 25 zu. Dieser Abstand 44 variiert entsprechend der Auslenkung des Seitenabschnitts 4 um seine Schwenkachse 14, wobei der laterale Abstand 44 in der auslenkungsfreien Position des Seitenabschnitts 4 derart gewählt ist, dass bei einer maximalen Auslenkung des Seitenabschnitts 4 um die Schwenkachse 14 eine Kollision des ersten Armabschnitts 19 des Tragarmes 20 mit der Wandung 25 des Haspelsegments 17 stets vermieden wird.

### Bezugszeichenliste

| | | | |
|---|---|---|---|
| 1 | Bandschneidwerk | 34 | Lagerstelle |
| 2 | Rahmen | 35 | Rollenlager |
| 3 | Mittenabschnitt | 36 | Konsole |
| 4 | Seitenabschnitt | 37 | Ausnehmung |
| 5 | Fördermittel | 38 | Bolzen |
| 6 | Messerbalken | 39 | Längsachse von 20 |
| 7 | Förderband | 40 | Längsachse von 22 |
| 8 | Förderband | 41 | Vertikale |
| 9 | Einzugsvorrichtung | 42 | Winkel |
| 10 | Einzugswalze | 43 | Hilfslinie |
| 11 | Einzugskanal | 44 | Abstand |
| 12 | Öffnung | 45 | Achse |
| 13 | Längsachse | 46 | Achse |
| 14 | Schwenkachse | 47 | Kippbewegung |
| 15 | Rahmengelenk | FR | Förderrichtung |
| 16 | Haspel | | |
| 17 | Haspelsegment | | |
| 18 | Tragarm | | |
| 19 | Erster Armabschnitt | | |
| 20 | Zweiter Armabschnitt | | |
| 21 | Freies Ende von 20 | | |
| 22 | Drehachse | | |
| 23 | Haspelrohr | | |
| 24 | Rotationsachse | | |
| 25 | Wandung | | |
| 26 | Seitenwand | | |
| 27 | Gelenk | | |
| 28 | Linearantrieb | | |
| 29 | Hydraulikzylinder | | |
| 30 | Gelenk | | |
| 31 | Linearantrieb | | |
| 32 | Hydraulikzylinder | | |
| 33 | Lagerstelle | | |

## Patentansprüche

1. Schneidwerk (1), umfassend einen Mittenabschnitt (3) sowie zumindest zwei Seitenabschnitte (4), die jeweils durch ein Rahmengelenk (15) mit dem Mittenabschnitt (3) um eine normal zur Längsachse (13) des Schneidwerks (1) im Wesentlichen horizontal verlaufende Schwenkachse (14) schwenkbar verbunden sind und außenseitig eine Seitenwand (26) aufweisen, wobei der Mittenabschnitt (3) und die Seitenabschnitte (4) einen segmentierten Rahmen (2) aufweisen, sowie eine aus zumindest zwei Haspelsegmenten (17) bestehende Haspel (16), wobei das jeweilige Haspelsegmente (17) an mehrteiligen Tragarmen (18) gegenüber den Rahmen (2) des Mittenabschnittes (3) sowie der Seitenabschnitte (4) in horizontaler Richtung verstellbar angeordnet ist, wobei die Tragarme (18) jeweils einen an den Rahmen (2) angelenkten ersten Armabschnitt (19) und einen relativ zum ersten Armabschnitt (19) verschieblichen zweiten Armabschnitt (20) aufweisen, an dem das jeweilige Haspelsegment (17) angeordnet ist, **dadurch gekennzeichnet, dass** die Tragarme (18) teleskopierbar ausgeführt sind, wobei die zweiten Armabschnitte (20) der äußersten Tragarme (18) des Schneidwerks (1) an ihren freien Enden (21) eine vertikale Drehachse (22) aufweisen, um welche das Haspelsegment (17) schwenkbar angelenkt ist.

2. Schneidwerk (1) nach Anspruch 1, **dadurch gekennzeichnet, dass** jedes Haspelsegment (17) eine Haspelwelle aufweist, wobei benachbarte Haspelwellen durch eine winkelbewegliche Kupplung miteinander verbunden sind.

3. Schneidwerk (1) nach Anspruch 2, **dadurch gekennzeichnet, dass** sich die freien Enden der zweiten Armabschnitte (20) der Tragarme (18) nur bis zur Rotationsachse (24) der Haspelwelle erstrecken.

4. Schneidwerk (1) nach einem der Ansprüche 1 bis 3, **dadurch gekennzeichnet, dass** die ersten Armabschnitte (19) der äußersten Tragarme (18) durch ein Gelenk (27) an dem Rahmen (2) der Seitenabschnitte (4) angelenkt sind, welches dazu eingerichtet ist, zumindest eine Schwenkbewegung um eine zur Längsachse (13) des Schneidwerks (1) achsparallele Achse sowie eine beidseitige laterale Kippbewegung relativ zu dieser Achse zuzulassen.

5. Schneidwerk (1) nach einem der Ansprüche 1 bis 4, **dadurch gekennzeichnet, dass** der erste Armabschnitt (19) als ein offenes oder geschlossenes Hohlprofil ausgeführt ist, in welchem der zweite Armabschnitt (20) relativbeweglich angeordnet ist.

6. Schneidwerk (1) nach Anspruch 5, **dadurch gekennzeichnet, dass** der zweite Armabschnitt (20) in dem ersten Armabschnitt (19) gleitgelagert oder rollengelagert ist.

7. Schneidwerk (1) nach Anspruch 5 oder 6, **dadurch gekennzeichnet, dass** sich der zweite Armabschnitt (20) der Tragarme (18) in Längsrichtung gesehen auf der dem Haspelsegment (17) abgewandten Seite über den ersten Armabschnitt (19) hinaus erstreckt.

8. Schneidwerk (1) nach einem der vorangehenden Ansprüche, **dadurch gekennzeichnet, dass** die Tragarme (18) durch Linearantriebe (31, 32) teleskopierbar sind.

9. Schneidwerk (1) nach einem der vorangehenden Ansprüche, **dadurch gekennzeichnet, dass** die Tragarme (18) durch Linearantriebe (28, 29) in vertikaler Richtung verstellbar sind.

10. Schneidwerk (1) nach einem der vorangehenden Ansprüche, **dadurch gekennzeichnet, dass** der jeweilige zur Seitenwand (26) benachbart angeordnete äußerste Tragarm (18) bezogen auf eine gedachte Vertikale (41) unter einem Winkel (42) in Richtung des Mittenabschnitts (3) geschwenkt angeordnet ist.

11. Schneidwerk (1) nach einem der vorangehenden Ansprüche, **dadurch gekennzeichnet, dass** die Linearantriebe (28, 29) zur Höhenverstellung zumindest des jeweiligen äußersten Tragarmes (18) durch jeweils ein Gelenk (30) an dem Rahmen (2) der Seitenabschnitte (4) sowie an dem Tragarm (18) angelenkt sind, welches dazu eingerichtet ist, zumindest eine Schwenkbewegung um eine zur Längsachse (13) des Schneidwerks (1) achsparallele Achse (45, 46) sowie eine beidseitige laterale Kippbewegung oder Schwenkbewegung (47) relativ zu dieser Achse (45, 46) zuzulassen.

12. Schneidwerk (1) nach einem der vorangehenden Ansprüche, **dadurch gekennzeichnet, dass** die Linearantriebe (31, 32) hydraulisch und/oder elektromechanisch betreibbar sind.

13. Schneidwerk (1) nach einem der vorangehenden Ansprüche, **dadurch gekennzeichnet, dass** das Schneidwerk (1) als ein Bandschneidwerk ausgeführt ist.
